(19) Europäisches Patentamt
European Patent Office
Office européen des brevets

(11) EP 4 648 159 A1

(12) EUROPEAN PATENT APPLICATION

(43) Date of publication:
**12.11.2025 Bulletin 2025/46**

(21) Application number: **25173337.4**

(22) Date of filing: **29.04.2025**

(51) International Patent Classification (IPC):
***H01M 10/0525*** *(2010.01)* ***H01M 50/403*** *(2021.01)*
***H01M 50/42*** *(2021.01)* ***H01M 50/431*** *(2021.01)*
***H01M 50/446*** *(2021.01)* ***H01M 50/449*** *(2021.01)*

(52) Cooperative Patent Classification (CPC):
**H01M 50/42; H01M 10/0525; H01M 50/403; H01M 50/431; H01M 50/446; H01M 50/449**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 KR 20240057496**

(71) Applicant: **SAMSUNG SDI CO., LTD.**
**Yongin-si, Gyeonggi-do 17084 (KR)**

(72) Inventors:
- **Lee, Jung Yoon**
  **16678 Suwon-si, Gyeonggi-do (KR)**
- **Kim, Soo Hee**
  **16678 Suwon-si, Gyeonggi-do (KR)**
- **Seo, Jin Weon**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **SEPARATOR FOR RECHARGEABLE LITHIUM BATTERY AND RECHARGEABLE LITHIUM BATTERY INCLUDING THE SAME**

(57) Examples of the present disclosure include a separator for a rechargeable lithium battery, and a rechargeable lithium battery including the separator. The separator for a rechargeable lithium battery includes a porous substrate and a coating layer on at least one surface of the porous substrate. The coating layer includes a binder and a filler. The binder includes a (meth) acryl-based binder including a sulfonate group-containing structural unit. The filler includes a mixture of boehmite and barium titanate in a weight ratio in a range of 20:80 to 80:20 with respect to 100 parts by weight of the mixture of boehmite and barium titanate.

EP 4 648 159 A1

## Description

BACKGROUND

### 1. Field of the disclosure

The present disclosure relates to a separator for a rechargeable lithium battery, and a rechargeable lithium battery including the separator.

### 2. Discussion of Related Art

With increasing presence of electronic devices using batteries, such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that include an active material capable of the intercalation and deintercalation of lithium ions, and produces electrical energy by oxidation and reduction reactions when the lithium ions are intercalated into and deintercalated from the positive electrode and the negative electrode.

The rechargeable lithium battery may further include a separator between the positive electrode and the negative electrode. The separator may have a low membrane resistance and a high heat resistance, resulting in low heat shrinkage.

SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery, and the separator increases the stability and lifetime of the battery by having a low dry shrinkage rate.

Another example embodiment includes a separator for a rechargeable lithium battery, the separator having a low membrane resistance.

Still another example embodiment includes a rechargeable lithium battery including the separator for a rechargeable lithium battery.

An example embodiment includes a separator for a rechargeable lithium battery.

1.The separator for a rechargeable lithium battery includes a porous substrate and a coating layer located on at least one surface of the porous substrate. The coating layer includes a binder and a filler. The binder includes a (meth)acryl-based binder including a sulfonate group-containing structural unit. The filler includes a mixture of boehmite and barium titanate in a weight ratio in a range of 20:80 to 80:20 with respect to 100 parts by weight of the mixture of boehmite and barium titanate.

2. In 1, wherein the barium titanate is substantially spherical.

3. In 1-2, wherein the boehmite is one of amorphous, substantially plate-shaped, substantially spherical, or substantially cubic.

4. In 1-3, wherein the barium titanate has a particle diameter D50 ranging from 100 nm to 500 nm, and the boehmite has a particle diameter D50 ranging from 100 nm to 500 nm.

5. In 1-4, wherein the sulfonate group-containing structural unit is represented by at least one of Chemical Formula 5, 6, and 7 below, or a combination thereof:

Chemical Formula 5:

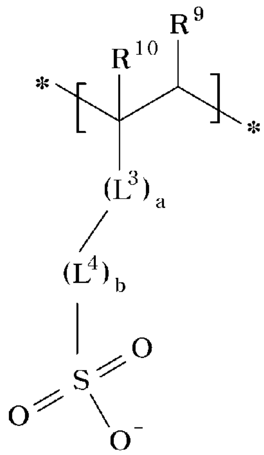

Chemical Formula 6:

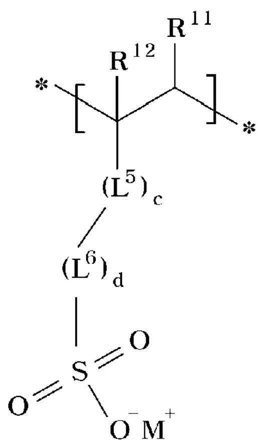

Chemical Formula 7:

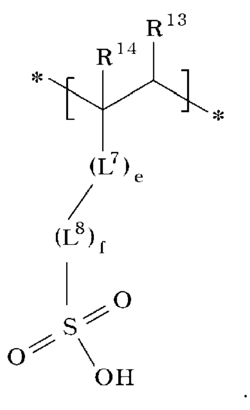

In Chemical Formulas 5 to 7,

$R^9$ to $R^{14}$ each independently is hydrogen or a C1 to C3 alkyl group,
$L^3$, $L^5$, and $L^7$ each independently is -C(=O)-, -C(=O)O-, -OC(=O)-, -O-, or - C(=O)NH-,
$L^4$, $L^6$, and $L^8$ each independently is a substituted or unsubstituted C1 to C10 alkylene group, a substituted or unsubstituted C3 to C20 cycloalkylene group, a substituted or unsubstituted C6 to C20 arylene group, or a

substituted or unsubstituted C3 to C20 heterocyclic group,
a, b, c, d, e, and f are each independently an integer ranging from 0 to 2, and
in Chemical Formula 6,
M is an alkali metal.

6. In 1-5, wherein the sulfonate group-containing structural unit is included in an amount in a range of 0.1 mol% to 60 mol% of the (meth)acryl-based binder.
7. In 1-6, wherein the (meth)acryl-based binder has a melting point of 160 °C or higher.
8. In 1-7, wherein the (meth)acryl-based binder further includes one or more of a structural unit derived from (meth) acrylate or (meth)acrylic acid, a cyano group-containing structural unit, and a structural unit derived from (meth) acrylamide.
9. In 1-8, wherein the (meth)acryl-based binder includes the sulfonate group-containing structural unit, the structural unit derived from (meth)acrylate or (meth)acrylic acid, and the cyano group-containing structural unit.
10. In 1-9, wherein the (meth)acryl-based binder includes the sulfonate group-containing structural unit and the structural unit derived from (meth)acrylamide.
11. In 1-10, wherein the (meth)acryl-based binder and the filler are included in a mass ratio in a range of 1:10 to 1:50.
12. In 1-11, wherein the coating layer has a total thickness ranging from 1 μm to 3 μm.

Another example embodiment includes a rechargeable lithium battery.
The rechargeable lithium battery includes a positive electrode, a negative electrode, and the separator for a rechargeable lithium battery, the separator being located between the positive electrode and the negative electrode.

## BRIEF DESCRIPTION OF THE DRAWINGS

FIG. 1 is a cross-sectional view illustrating a separator for a rechargeable lithium battery, according to one example embodiment.
FIGS. 2 to 5 are schematic cross-sectional views illustrating a rechargeable lithium battery, according to one example embodiment.
FIG. 6 shows the scanning electron microscope (SEM) results of a coating layer of the separator, according to one example embodiment.

## DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.
Unless otherwise stated herein, when a part such as a layer, a membrane, an area, a plate, and the like, is described as being disposed "on" another part, it includes not only a case where the part is "directly on" another part, but also a case where there are other parts therebetween.
Unless otherwise stated herein, the singular may also include the plural.
In the present specification, "a combination thereof" may indicate a mixture, stack, composite, copolymer, alloy, blend, or reaction product of constituents.
Unless otherwise defined herein, a particle diameter is an average particle diameter. In addition, the particle diameter refers to an average particle diameter D50, which refers to a diameter of a particle with a cumulative volume of 50% by volume in a particle diameter distribution. The average particle diameter D50 may be measured by methods known to those skilled in the art and for example, may be measured using a particle size analyzer, a transmission electron microscope photograph, or a scanning electron microscope photograph. As another method, the average particle diameter D50 may be obtained by measuring the particle diameter using a measuring device using dynamic light scattering, performing data analysis to count the number of particles for each particle size range, and then calculating the average particle diameter D50 therefrom. Alternatively, the average particle diameter D50 may be measured using a laser diffraction method. When measuring the average particle diameter by the laser diffraction method, for example, the average particle diameter D50 based on 50% of a particle diameter distribution in the measuring device is calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W. The laser diffraction method may be performed according to ISO 13320:2020. According to the IUPAC definition, the equivalent diameter of a non-spherical particle is equal to a diameter of a spherical particle that

exhibits identical properties to that of the investigated non-spherical particle.

A particle diameter may be a particle size.

In the present specification, "(meth)acryl" refers to acryl and/or methacryl.

Hereinafter, unless otherwise defined, "substitution" indicates that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, at least one of a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" indicates including one or more heteroatoms such as or including at least one of N, O, S, Si, and P.

In addition, in the chemical formulas, the symbol * refers to a part that is connected to the same or different atom, group, or structural unit.

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less ($X\leq$ and $\leq Y$)."

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

A separator for a rechargeable lithium battery includes a porous substrate, and a coating layer on at least one surface of the porous substrate, wherein the coating layer includes a binder and a filler. The binder includes a (meth)acryl-based binder including a sulfonate group-containing structural unit. The filler includes a mixture of boehmite and barium titanate in a weight ratio in a range of 20:80 to 80:20 with respect to 100 parts by weight of the mixture of boehmite and barium titanate.

According to one example embodiment, the barium titanate may be substantially spherical. The spherical barium titanate can further lower the membrane resistance of the separator by having a low specific surface area of particles and a low moisture content. The mixture in the above weight ratio can lower the heat shrinkage rate of the separator without affecting the property of lowering the membrane resistance of the separator by the barium titanate. Therefore, the thermal stability and ionic conductivity of the separator including the coating layer can be increased.

According to one example embodiment, a dry shrinkage rate in each of a machine direction (MD) and a transverse direction (TD) measured after the separator is left at 150 °C for 1 hour may be 15% or less, for example, 11% or less.

According to one example embodiment, the separator may have a resistance of 0.55 Ω or less, for example, 0.5 Ω or less.

For example, the above weight ratio may range from 20:80, 25:75, 30:70, 35: 65, 40:60, 45:55, 50:50, 55:45, 60:40, 65:35, 70:30, 75:25, 80:20, 25:75 to 75:25, for example, from 40:60 to 60:40.

The boehmite was selected because it may not affect the property of lowering membrane resistance by the barium titanate. For example, the boehmite may be amorphous, substantially plate-shaped, substantially spherical, or substantially cubic, as an example the boehmite may be plate-shaped or cubic, and as another example, cubic. The cubic boehmite can have a desired or improved effect of reducing a heat shrinkage rate due to the above-described resistance reduction and heat resistance improvement.

The boehmite may have a particle diameter D50 ranging from 100 nm to 500 nm. Within the above range, it can be possible to achieve an effect of lowering the heat shrinkage rate of the separator. For example, the particle diameter D50

may range from 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 nm, 200 to 500 nm, from 150 to 300 nm, or from 200 to 300 nm.

The barium titanate may have a particle diameter D50 ranging from 100 nm to 500 nm. Within the above range, it can be possible to achieve an effect of lowering membrane resistance. For example, the particle diameter D50 may range from 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 nm, 100 to 400 nm, from 150 to 300 nm, or from 200 to 300 nm.

According to one example embodiment, the mixture may be included in an amount of 95 wt% or more of a total filler of the coating layer, for example, ranging from 95 wt% to 100 wt%, from 98 wt% to 100 wt%, or 100 wt%.

The filler may be included in a desired content with respect to the binder, for example, the (meth)acryl-based binder. According to one example embodiment, the (meth)acryl-based binder and the filler may be included in a mass ratio in a range of 1:10 to 1:50, for example, from 1:10 to 1:30, 1:10, 1:11, 1:12, 1:13, 1:14, 1:15, 1:16, 1:!7, 1:18, 1:19, 1:20, 1:21, 1:22, 1:23, 1:24, 1:25, 1:26, 1:27, 1:28, 1:29, 1:30, 1:31, 1:32, 1:33, 1:34, 1:35, 1:36, 1:37, 1:38, 1:39, 1:40, 1:41, 1:42, 1:43, 1:44, 1:45, 1:46, 1:47, 1:48, 1:49, 1:50, or from 1:20 to 1:30. Within the above range, it can be possible to achieve an effect of membrane resistance and a heat shrinkage rate.

According to one example embodiment, the mixture may be included in an amount of 95 wt% or more of a total filler of the coating layer, for example, ranging from 95 wt% to 100 wt%, from 98 wt% to 100 wt%, or 100 wt%. Within the above range, the above effects of the separator can be readily achieved.

The filler may be included in an amount ranging from 50 wt% to 99 wt% of the total amount of the coating layer, for example, from 70 wt% to 99 wt%, for example, from 75 wt% to 99 wt%, for example, from 80 wt% to 99 wt%, for example, from 85 wt% to 99 wt%, for example, from 90 wt% to 99 wt%, or for example, from 95 wt% to 99 wt%. When the filler is included within the above range, the separator can exhibit desired or improved heat resistance, durability, oxidation resistance, and stability.

The binder includes a (meth)acryl-based binder.

According to one example embodiment, the (meth)acryl-based binder may be included in an amount of 95 wt% or higher of the binder, for example, ranging from 95wt% to 100 wt%, from 98 wt% to 100 wt%, or 100 wt%.

The (meth)acryl-based binder is a water-based heat-resistant binder.

The (meth)acryl-based binder includes a (meth)acryl-based binder including a sulfonate group-containing structural unit. The (meth)acryl-based binder including a sulfonate group-containing structural unit can be sufficient for improving heat resistance and reducing membrane resistance when included in the coating layer together with the above mixture.

The sulfonate group-containing structural unit may be included in the (meth)acryl-based binder in an amount ranging from 0.1 mol% to 60 mol%, for example, from 0.1 mol% to 20 mol%, from 0.1 mol% to 10 mol%, for example, from 1 mol% to 20 mol%, for example, from 1 mol% to 10 mol%, for example, from 20 mol% to 65 mol%, or from 30 mol% to 65 mol%. When the sulfonate group-containing structural unit is included within the above range, the (meth)acryl-based binder, and the separator including the(meth)acryl-based binder, can exhibit desired or improved bonding strength, heat resistance, air permeability, and oxidation resistance.

The (meth)acryl-based binder may further include one or more of a structural unit derived from (meth)acrylate or (meth)acrylic acid, a cyano group-containing structural unit, and a structural unit derived from (meth)acryl amide.

The structural unit derived from (meth)acrylate or (meth)acrylic acid may be included in the (meth)acryl-based binder in an amount ranging from 0 mol% to 70 mol%, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 mol%, from 10 mol% to 70 mol%, from 10 mol% to 60 mol%, from 2 mol% to 60 mol%, from 10 mol% to 50 mol%, from 30 mol% to 60 mol%, from 10 mol% to 40 mol%, or from 40 mol% to 55 mol%. When the structural unit derived from (meth)acrylate or (meth)acrylic acid is included in the above range, a separator including the (meth)acryl-based binder can exhibit desired or improved bonding strength, heat resistance, air permeability, and oxidation resistance.

The cyano group-containing structural unit may be included in the (meth)acryl-based binder in an amount ranging from 0 mol% to 85 mol%, for example, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85 mol%, from 30 mol% to 85 mol%, for example, from 30 mol% to 70 mol%, for example, from 30 mol% to 60 mol%, or for example, from 35 mol% to 55 mol%. When the cyano group-containing structural unit is included within the above range, the (meth)acryl-based binder, and the separator including the (meth)acryl-based binder, can secure desired or improved oxidation resistance and exhibit desired or improved bonding strength, heat resistance, and air permeability.

The structural unit derived from (meth)acrylamide may be included in the (meth)acryl-based binder in an amount ranging from 0 mol% to 95 mol%, for example, 0, 1, 2, 3, 4, 5, 6, 7, 8, 9, 10, 11, 12, 13, 14, 15, 16, 17, 18, 19, 20, 21, 22, 23,

24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95 mol%, from 40 mol% to 85 mol%, for example, from 50 mol% to 85 mol%, from 55 mol% to 95 mol%, from 60 mol% to 85 mol%, from 75 mol% to 95 mol%, or from 80 mol% to 95 mol%. When the structural unit is included within the above range, the (meth)acryl-based binder, and the separator including the (meth)acryl-based binder, can secure desired or improved oxidation resistance and exhibit desired or improved bonding strength, heat resistance, and air permeability.

According to one example embodiment, the (meth)acryl-based binder may have a sulfonate group-containing structural unit, a structural unit derived from (meth)acrylate or (meth)acrylic acid, and a cyano group-containing structural unit (referred to as a first binder). In one example, the total amount of the sulfonate group-containing structural unit, the structural unit derived from (meth)acrylate or (meth)acrylic acid, and the cyano group-containing structural unit may be 95 mol% or more, for example, range from 95 mol% to 100 mol%, or 100 mol% among 100 mol% of the (meth)acryl-based binder.

According to another example embodiment, the (meth)acryl-based binder may have a sulfonate group-containing structural unit and a structural unit derived from (meth)acrylamide (referred to as a second binder). In one example, the total amount of the sulfonate group-containing structural unit and the structural unit derived from (meth)acrylamide may be 95 mol% or more, for example, range from 95 mol% to 100 mol%, or 100 mol% among 100 mol% of the (meth)acryl-based binder.

According to still another example embodiment, the (meth)acryl-based binder may have a sulfonate group-containing structural unit, a structural unit derived from (meth)acrylate or (meth)acrylic acid, and a structural unit derived from (meth)acrylamide (referred to as a third binder). In one example, the total amount of the sulfonate group-containing structural unit, the structural unit derived from (meth)acrylate or (meth)acrylic acid, and the structural unit derived from (meth)acrylamide may be 95 mol% or more, for example, range from 95 mol% to 100 mol%, or 100 mol% among 100 mol% of the (meth)acryl-based binder.

For example, the (meth)acryl-based binder may be the second binder or the third binder. The second or third binder may be more effective in lowering membrane resistance and improving heat resistance.

Each structural unit of the (meth)acryl-based binder is described in detail.

The structural unit derived from (meth)acrylate or (meth)acrylic acid may be represented, for example, by any one or more of Chemical Formula 1, 2, 3 below, or a combination thereof:

Chemical Formula 1:

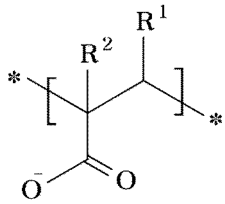

Chemical Formula 2:

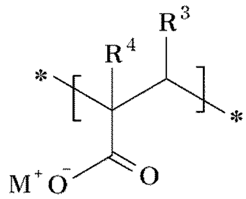

Chemical Formula 3:

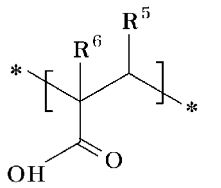

In Chemical Formulas 1 to 3,
$R^1$ to $R^6$ each independently is hydrogen or a methyl group, and in Chemical Formula 2,
M is an alkali metal.

The alkali metal may be or include, for example, at least one of lithium, sodium, potassium, rubidium, or cesium.

For example, the structural unit derived from (meth)acrylate or (meth)acrylic acid may include the structural unit represented by Chemical Formula 2 and the structural unit represented by Chemical Formula 3, and in this case, the structural unit represented by Chemical Formula 2 and the structural unit represented by Chemical Formula 3 may be included in a molar ratio in a range of 10:1 to 1:2, 10:1 to 1:1, or 5:1 to 1:1.

The cyano group-containing structural unit may be, for example, represented by Chemical Formula 4 below:

Chemical Formula 4:

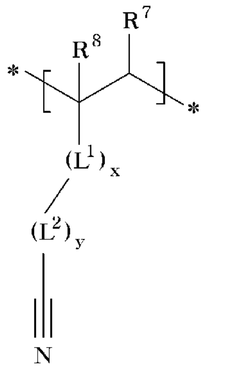

In Chemical Formula 4,

$R^7$ and $R^8$ each independently is hydrogen or a C1 to C3 alkyl group,
$L^1$ is -C(=O)-, -C(=O)O-, -OC(=O)-, -O-, or -C(=O)NH-,
x is an integer ranging from 0 to 2,
$L^2$ is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
y is an integer ranging from 0 to 2.

The cyano group-containing structural unit may be or include, for example, a structural unit derived from at least one of (meth)acrylonitrile, an alkene nitrile, cyanoalkyl (meth)acrylate, or 2-(vinyloxy)alkanenitrile. Here, the alkene may be or include at least one of a C1 to C20 alkene, a C1 to C10 alkene, or a C1 to C6 alkene, the alkyl may be or include at least one of a C1 to C20 alkyl, a C1 to C10 alkyl, or a C1 to C6 alkyl, and the alkane may be or include at least one of a C1 to C20 alkane, a C1 to C10 alkane, or a C1 to C6 alkane.

The alkene nitrile may be or include, for example, at least one of allyl cyanide, 4-pentenenitrile, 3-pentenenitrile, 2-pentenenitrile, 5-hexenenitrile, and the like. The cyanoalkyl (meth)acrylate may be or include, for example, at least one of cyanomethyl (meth)acrylate, cyanoethyl (meth)acrylate, cyanopropyl (meth)acrylate, cyanooctyl (meth)acrylate, and the like. The 2-(vinyloxy)alkanenitrile may be or include, for example, at least one of 2-(vinyloxy)ethanenitrile, 2-(vinyloxy)propanenitrile, and the like.

The sulfonate group-containing structural unit may be or include a structural unit including at least one of a conjugate base of sulfonic acid, a sulfonate salt, sulfonic acid, or a derivative thereof. For example, the sulfonate group-containing structural unit may be represented by any one or more of Chemical Formula 5, 6, and 7 below, or a combination thereof:

Chemical Formula 5:

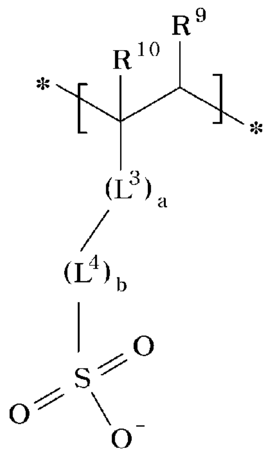

Chemical Formula 6:

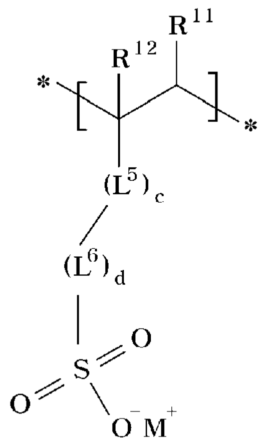

Chemical Formula 7:

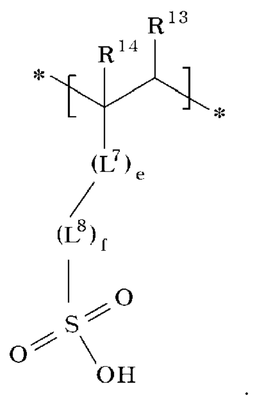

In Chemical Formulas 5 to 7,

$R^9$ to $R^{14}$ each independently is hydrogen or a C1 to C3 alkyl group,
$L^3$, $L^5$, and $L^7$ each independently is -C(=O)-, -C(=O)O-, -OC(=O)-, -O-, or - C(=O)NH-,
$L^4$, $L^6$, and $L^8$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, d, e, and f are each independently an integer ranging from 0 to 2, and
in Chemical Formula 6,

M is an alkali metal.

For example, in Chemical Formulas 5 to 7,

$L^3$, $L^5$, and $L^7$ each independently is -C(=O)NH-,
$L^4$, $L^6$, and $L^8$ each independently is a C1 to C10 alkylene group, and
a, b, c, d, e, and f are an integer equal to 1.

The sulfonate group-containing structural unit may include only one, or two or more, of the structural unit represented by Chemical Formula 5, the structural unit represented by Chemical Formula 6, and the structural unit represented by Chemical Formula 7. As an example, the sulfonate group-containing structural unit may include the structural unit represented by Chemical Formula 6, and as another example, the sulfonate group-containing structural unit may include the structural unit represented by Chemical Formula 6 and the structural unit represented by Chemical Formula 7.

The sulfonate group-containing structural unit may be or include, for example, a structural unit derived from at least one of vinyl sulfonic acid, allyl sulfonic acid, styrene sulfonic acid, anethole sulfonic acid, (meth)acrylamidoalkane sulfonic acid, sulfoalkyl (meth)acrylate, or salts thereof. Here, the alkane may be or include at least one of a C1 to C20 alkane, a C1 to C10 alkane, or a C1 to C6 alkane, and the alkyl may be or include at least one of a C1 to C20 alkyl, a C1 to C10 alkyl, or a C1 to C6 alkyl. The salt is composed of or incudes the above-described sulfonic acid and a desired ion. The ion may be or include, for example, an alkali metal ion, and in this case, the salt may be or include an alkali metal salt of sulfonic acid.

The (meth)acrylamidoalkane sulfonic acid may be or include, for example, 2-(meth)acrylamido-2-methylpropanesulfonic acid, and the sulfoalkyl (meth)acrylate may be or include, for example, at least one of 2-sulfoethyl (meth) acrylate, 3-sulfopropyl (meth)acrylate, and the like.

The structural unit derived from (meth)acrylamide may be represented by Chemical Formula 8 below.

Chemical Formula 8:

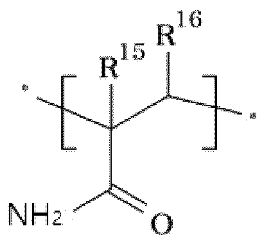

In Chemical Formula 8,

$R^{15}$ and $R^{16}$ each independently is hydrogen or a methyl group.

The (meth)acryl-based binder may include an alkali metal. The alkali metal may be present in the form of a cation and for example, may be or include at least one of lithium, sodium, potassium, rubidium, or cesium. For example, the alkali metal may be combined with the (meth)acryl-based binder, and may be present in the form of a salt. The alkali metal may assist in the synthesis of the (meth)acryl-based binder in an aqueous solvent, increase the bonding strength of the coating layer, and increase the heat resistance, air permeability, oxidation resistance, and the like, of the separator.

The alkali metal may be included in an amount ranging from 1 wt% to 40 wt% of the alkali metal and the (meth) acryl-based binder, for example, from 1 wt% to 30 wt%, from 1 wt% to 20 wt%, or from 10 wt% to 20 wt%. For example, the (meth)acryl-based binder and the alkali metal may be included in a weight ratio in a range of 99:1 to 60:40, a weight ratio of 99:1 to 70:30, for example, a weight ratio of 99:1 to 80:20, for example, a weight ratio of 90:10 to 80:20.

In addition, the alkali metal may be included in an amount ranging from 0.1 mol% to 1.0 mol% with respect to the total content of the alkali metal and the (meth)acryl-based binder. When the alkali metal is included within the above range, the coating layer can have a desired or improved bonding strength, and a separator including the coating layer can exhibit desired or improved heat resistance, air permeability, and oxidation resistance.

The (meth)acryl-based binder may be in various forms, such as an alternating polymer in which the units are alternately distributed, a random polymer in which the units are randomly distributed, or a graft polymer in which some structural units are grafted.

A weight average molecular weight (Mw) of the (meth)acryl-based binder may range from 200,000 g/mol to 700,000 g/mol, for example, 200,000 g/mol to 600,000 g/mol, or for example, 300,000 g/mol to 600,000 g/mol. When the

weight average molecular weight of the (meth)acryl-based binder satisfies the above range, the (meth)acryl-based binder, and the separator including the (meth)acryl-based binder, can exhibit desired or improved bonding strength, heat resistance, air permeability, and oxidation resistance. The weight average molecular weight may be or include a polystyrene-converted average molecular weight measured using gel permeation chromatography.

A glass transition temperature of the (meth)acryl-based binder may range from 200 °C to 280 °C, for example, from 210 °C to 270 °C, or for example, from 210 °C to 260 °C. When the glass transition temperature of the (meth)acryl-based binder satisfies the above range, the (meth)acryl-based binder, and the separator including the (meth)acryl-based binder, can exhibit desired or improved bonding strength, heat resistance, air permeability, and oxidation resistance. The glass transition temperature may be a value measured by differential scanning calorimetry.

The (meth)acryl-based binder may have a melting point Tm of 160 °C or higher.

The (meth)acryl-based binder may be prepared by, e.g., a solution polymerization method.

According to one example embodiment, the (meth)acryl-based binder may be included in the coating layer of the separator in the form of a film.

The coating layer may have a thickness ranging from 0.01 μm to 20 μm, and within the above range, have a thickness ranging from 1 μm to 10 μm, from 1 μm to 5 μm, or from 1 μm to 3 μm.

A ratio of the thickness of the coating layer to the thickness of the porous substrate may range from 0.05 to 0.5, for example, from 0.05 to 0.4, from 0.05 to 0.3, or from 0.1 to 0.2. Within the above range, the separator can exhibit desired or improved air permeability, heat resistance, bonding strength, and the like. Herein, "thickness of the coating layer" indicates a thickness of one coating layer when the coating layer is formed on only one surface of the porous substrate, and indicates a thickness of two coating layers when the coating layer is formed on both surfaces of the porous substrate.

## Porous substrate

The porous substrate may be or include a substrate having multiple pores and commonly included in electrochemical devices. The porous substrate may be or include a polymer membrane formed of or including any one polymer such as or including at least one of a polyolefin such as polyethylene or polypropylene, polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have a desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin or include a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

The separator for a rechargeable lithium battery according to one example embodiment can exhibit desired or improved air permeability and have an air permeability value of, for example, less than 200 sec/100 cc, for example, 190 sec/100 cc or less or 180 sec/100 cc or less. That is, the separator may have an air permeability value of less than 40 sec/100 cc·1 μm per unit thickness, for example, 30 sec/100 cc·1 μm or less, or 25 sec/100 cc·1 μm or less. Herein, the air permeability refers to the time (seconds) it takes for 100 cc of air to pass through the unit thickness of the separator. The air permeability per unit thickness may be obtained by measuring the air permeability for the total thickness of the separator, and dividing the air permeability by the thickness. The air permeability may be obtained by measuring the time it takes for 100 cc of air to pass through the separator using an air permeability measurement device (EG01-55-1MR, Asahi Seiko Co., Ltd.).

The separator for a rechargeable lithium battery according to one example embodiment may be formed by applying a composition for forming a coating layer on one surface, or on both surfaces, of the porous substrate, drying, and then curing the composition. The curing may be performed using conventional methods known to those skilled in the art.

FIG. 1 is a cross-sectional view illustrating a separator for a rechargeable lithium battery, according to one example embodiment.

Referring to FIG. 1, the separator for a rechargeable lithium battery includes a porous substrate 1, and a coating layer 2 on both surfaces of the porous substrate 1. The coating layer 2 includes boehmite 3, barium titanate 4, and a (meth)acryl-based binder 5.

Rechargeable lithium battery

According to one example embodiment, the rechargeable lithium battery includes the separator for a rechargeable lithium battery, a positive electrode, and a negative electrode.
The separator for the rechargeable lithium battery refers to the description described above. The separator for the rechargeable lithium battery may be located between the positive electrode and the negative electrode.

Positive electrode

A positive electrode for a rechargeable lithium battery may include a current collector, and a positive electrode active material layer on the current collector. The positive electrode active material layer may include a positive electrode active material, and may further include a binder and/or a conductive material.
For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be included in the positive electrode active material.
The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.
As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_dX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1{}_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_dO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).
In the above Chemical Formulas, A is at least one of Ni, Co, Mn, or a combination thereof; X is at least one of Al, Ni, Co, Mn, Cr, Fe, Mg, Sr, V, a rare earth element or a combination thereof; D is at least one of O, F, S, P, or a combination thereof; G is at least one of Al, Cr, Mn, Fe, Mg, La, Ce, Sr, V, or a combination thereof; and $L^1$ is at least one of Mn, Al, or a combination thereof.
The positive electrode active material may be or include, for example, a high nickel-based positive electrode active material having a nickel content that is greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of achieving high capacity, and can be applied to a high-capacity, high-density rechargeable lithium battery.
An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.
The binder is configured to attach the positive electrode active material particles to each other, and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.
The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as or including a polyphenylene derivative; or a mixture thereof.
Al may be included as the current collector, but is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx ($0 < x < 2$), a Si-Q alloy (where Q is at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

The binder may be configured to attach the negative electrode active material particles to each other, and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any

material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio in a range of 1:1 to 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to automobiles, mobile phones, and/or various types of electric devices, as non-limiting examples.

Hereinafter, examples and comparative examples of the present disclosure are described. However, the following examples are merely example embodiments of the present disclosure, and the present disclosure is not limited to the following examples.

**Preparation Example 1**

In a 10 L four-necked flask provided with a stirrer, a thermometer, and a cooling tube, a process of adding distilled water (6361 g), acrylic acid (72.06 g, 1.0 mol), acrylamide (604.1 g, 8.5 mol), potassium persulfate (2.7 g, 0.01 mol), 2-acrylamido-2-methylpropanesulfonic acid (103.6 g, 0.5 mol), and a 5N aqueous lithium hydroxide solution (1.05 equivalents with respect to a total amount of 2-acrylamido-2-methylpropanesulfonic acid), then reducing an internal pressure to 10 mmHg using a diaphragm pump, and returning the internal pressure to a normal pressure using nitrogen was repeated three times.
The reaction was carried out for 12 hours while controlling the temperature of the reaction solution to be stable between 65 °C and 70 °C. After cooling to room temperature, the pH of the reaction solution was adjusted to 7 to 8 using a 25% aqueous ammonia solution.
In this way, poly(acrylic acid-co-acrylamide-co-2-acrylamido-2-methylpropane sulfonic acid) sodium salt was prepared. A molar ratio of acrylic acid, acrylamide, and 2-acrylamido-2-methylpropane sulfonic acid was 10:85:5. A non-volatile component in about 10 mL of the reaction solution (reaction product) was measured, and the measurement result was 9.5 wt% (theoretical value: 10%).

**Preparation Example 2**

In a 3 L four-necked flask provided with a stirrer, a thermometer, and a cooling tube, a process of adding distilled water (968 g), acrylic acid (AA) (54.00 g, 0.62 mol), ammonium persulfate (0.65 g, 2.85 mol), 2-acrylamido-2-methylpropanesulfonic acid (AMPS) (6.00 g, 0.02 mol), and a 20% aqueous sodium hydroxide solution (0.8 equivalents with respect to the total amount of acrylic acid and 2-acrylamido-2-methylpropanesulfonic acid), then reducing an internal pressure to 10 mmHg using a diaphragm pump, and returning the internal pressure to a normal pressure using nitrogen was repeated three times, and then acrylonitrile (AN) (60.00 g, 0.94 mol) was added.
The reaction was carried out for 18 hours while controlling the temperature of a reaction solution to be stable between 65 °C and 70 °C, and after adding ammonium persulfate (0.22 g, 0.95 mol) for the second time, the temperature was raised to 80 °C, and the reaction was carried out for another 4 hours. After cooling to room temperature, the pH of the reaction solution was adjusted to 7 to 8 using a 25% aqueous ammonia solution.
Accordingly, poly(acrylic acid-co-acrylic acid lithium salt-co-acrylonitrile-co-2-acrylamido-2-methylpropane sulfonic acid lithium salt) was prepared as an acryl-based binder. A molar ratio of acrylic acid + lithium acrylic acid salt, acrylonitrile and 2-acrylamido-2-methylpropane sulfonic acid lithium salt was 39:59:2. A non-volatile component in about 10 mL of the reaction solution (reaction product) was measured and the measurement result was 9.0 wt% (theoretical value: 10%).

**Preparation Example 3**

An acryl-based binder was prepared in the same manner as Preparing Example 1, with a difference that acrylic acid and acrylonitrile were used and 2-acrylamido-2-methylpropane sulfonic acid was not used. A molar ratio of acrylic acid + acrylic acid lithium salt and acrylonitrile was 42:58. The non-volatile component of the reaction solution was 9.0 wt% (theoretical value: 10%).

**Example 1**

As a filler, a mixture of a total of 100 parts by weight including boehmite (particle diameter D50: 0.25 μm, cubic, Anhui Estone) and barium titanate (particle diameter D50: 0.25 μm, spherical, KAISHENG) in a weight ratio of 75:25 (parts by weight) was prepared.
A dispersion was prepared by mixing the (meth)acryl-based binder (10 wt% in distilled water) prepared in Preparation Example 1 and the mixture as the filler in a mass ratio of 1:20 for the (meth)acryl-based binder and the filler based on solid content, adding the mixture to a water solvent, and then milling and dispersing the (meth)acryl-based binder and the filler at 25 °C for 30 minutes using a bead mill.
A composition for forming a coating layer was prepared by adding water to the dispersion so that the total solid content was 20 wt%.
A separator for a rechargeable lithium battery was manufactured by coating both surfaces of a polyethylene film (thickness: 9 μm, air permeability: 120 sec/100 cc, and puncture strength: 480 kgf) as a porous substrate with the composition for forming a coating layer in a thickness of 1.5 μm using a die coating method and then drying and aging the porous substrate with the composition in an oven at 80 °C for 16 hours.

**Examples 2 to** 7

Separators for a rechargeable lithium battery were manufactured in the same manner as in Example 1, with a difference that in Example 1, as shown in Table 1 below, the type of (meth)acryl-based binder, a ratio of boehmite and barium titanate in the filler mixture, and a shape of boehmite were changed.

In Example 6, boehmite (particle diameter D50: 0.3 μm, plate-shaped, Anhui Estone) was used.

FIG. 6 shows the SEM results of a coating layer of a separator according to Example 2. Referring to FIG. 6, the coating density was increased by filling spherical barium titanate in the spaces between cubic boehmite in the coating layer.

**Comparative Examples 1 to 6**

Separators for a rechargeable lithium battery were manufactured in the same manner as in Example 1, with a difference that in Example 1, as shown in Table 1 below, the type of (meth)acryl-based binder and a ratio of boehmite and barium titanate in the filler mixture were changed.

In Comparative Example 5, alumina (particle diameter D50: 0.2 μm, spherical, Anhui Estone) was used.

**Dry shrinkage rate (units: %)**

Samples were manufactured by cutting the separators for a rechargeable lithium battery of the Examples and the Comparative Examples to a size of 8 cm×8 cm. A shrinkage rate in each of a machine direction (MD) and a transverse direction (TD) was calculated by drawing a square with a size of 5 cm×5 cm on surfaces of the samples, then putting the samples between pieces of paper or alumina powder, leaving the samples in an oven at 150 °C for 1 hour, taking the sample out, and then measuring the side dimensions of the drawn square. The shrinkage rate was calculated according to Equation 1 below. Equation 1:

Equation 1:

$$\text{Shrinkage rate} = (L0 - L1) / L0 \times 100.$$

L0 denotes an initial length of the separator, and L1 denotes a length of the separator after being left at 150 °C for 1 hour.

**Membrane resistance (units: Ω)**

Membrane resistance was evaluated by electrochemical impedance spectroscopy (EIS) resistance. Test cells were manufactured by impregnating the separators manufactured in the Examples and Comparative Examples with a mixed solvent of ethylene carbonate, ethyl methyl carbonate, and dimethyl carbonate (2/1/7 volume ratio) in which 1.5M $LiPF_6$ was dissolved, inserting the test cells into a lead tabattached aluminum foil electrode, and sealing the test cells in an aluminum pack, and the resistance (Ω) of these test cells was measured by an AC impedance method (measurement frequency: 100 kHz) at 20 °C.

Table 1:

| | Filler | | | Binder | Binder:filler | Coating thickness | Shrinkage rate | | Membrane resistance |
|---|---|---|---|---|---|---|---|---|---|
| | Boehmite | Barium titanate | Alumina | | | | MD | TD | |
| Example 1 | 75 (cubic) | 25 (spherical) | 0 | Preparation Example 1 | 1:20 | 1.5/1.5 | 2 | 2 | 0.46 |
| Example 2 | 50 (cubic) | 50 (spherical) | 0 | Preparation Example 1 | 1:20 | 1.5/1.5 | 3 | 2 | 0.41 |
| Example 3 | 25 (cubic) | 75 (spherical) | 0 | Preparation Example 1 | 1:20 | 1.5/1.5 | 8 | 7 | 0.40 |
| Example 4 | 20 (cubic) | 80 (spherical) | 0 | Preparation Example 1 | 1:20 | 1.5/1.5 | 11 | 10 | 0.38 |
| Example 5 | 80 (cubic) | 20 (spherical) | 0 | Preparation Example 1 | 1:20 | 1.5/1.5 | 2 | 2 | 0.47 |
| Example 6 | 50 (plate-shaped) | 50 (spherical) | 0 | Preparation Example 1 | 1:20 | 1.5/1.5 | 7 | 7 | 0.42 |
| Example 7 | 50 (cubic) | 50 (spherical) | 0 | Preparation Example 2 | 1:20 | 1.5/1.5 | 10 | 10 | 0.42 |
| Comparative Example 1 | 100 (cubic) | 0 | 0 | Preparation Example 1 | 1:20 | 1.5/1.5 | 19 | 17 | 0.60 |
| Comparative Example 2 | 0 | 100 (spherical) | 0 | Preparation Example 1 | 1:20 | 1.5/1.5 | 21 | 19 | 0.40 |
| Comparative Example 3 | 10 (cubic) | 90 (spherical) | 0 | Preparation Example 1 | 1:20 | 1.5/1.5 | 18 | 16 | 0.40 |
| Comparative Example 4 | 90 (cubic) | 10 (spherical) | 0 | Preparation Example 1 | 1:20 | 1.5/1.5 | 16 | 16 | 0.49 |
| Comparative Example 5 | 50 (cubic) | 0 | 50 (spherical) | Preparation Example 1 | 1:20 | 1.5/1.5 | 17 | 15 | 0.58 |
| Comparative Example 6 | 50 (cubic) | 50 (spherical) | 0 | Preparation Example 3 | 1:20 | 1.5/1.5 | 20 | 17 | 0.46 |

As shown in Table 1, a separator for a lithium secondary battery according to an example embodiment can increase the stability and lifetime of the battery by providing a significantly low dry shrinkage rate and a low membrane resistance.

A separator for a lithium secondary battery according to one example embodiment can increase the stability and lifetime of the battery by providing a significantly low dry shrinkage rate and a low membrane resistance.

## Claims

**1.** A separator (30) for a rechargeable lithium battery (100), the separator comprising:

a porous substrate (1); and
a coating layer (2) on at least one surface of the porous substrate,
wherein the coating layer includes a binder (5) and a filler,
the binder includes a (meth)acryl-based binder including a sulfonate group-containing structural unit, and
the filler includes a mixture of boehmite and barium titanate in a weight ratio in a range of 20:80 to 80:20 with respect to 100 parts by weight of the mixture of boehmite and barium titanate.

**2.** The separator (30) of claim 1, wherein the barium titanate is substantially spherical.

**3.** The separator (30) of claim 1 or 2, wherein the boehmite is one of amorphous, plate-shaped, substantially spherical, and substantially cubic.

**4.** The separator (30) of any one of the preceding claims, wherein:

the barium titanate has a particle diameter D50 ranging from 100 nm to 500 nm, and
the boehmite has a particle diameter D50 ranging from 100 nm to 500 nm measured by a laser diffraction method.

**5.** The separator (30) of any one of the preceding claims, wherein the sulfonate group-containing structural unit is represented by at least one of Chemical Formula 5, 6, and 7:

Chemical Formula 5:

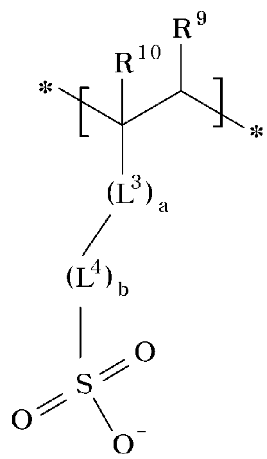

Chemical Formula 6:

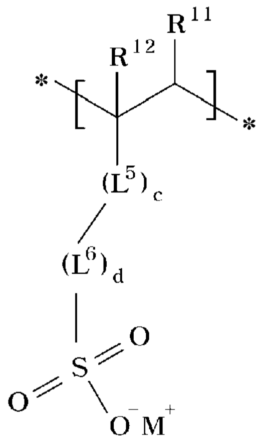

Chemical Formula 7:

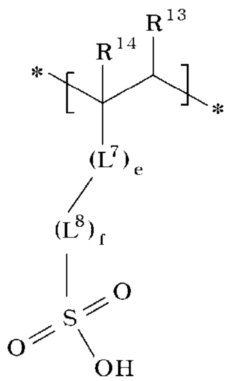

,

in Chemical Formulas 5 to 7,

$R^9$ to $R^{14}$ each independently comprises hydrogen or a C1 to C3 alkyl group,
$L^3$, $L^5$, and $L^7$ each independently comprises -C(=O)-, -C(=O)O-, -OC(=O)-, - O-, or -C(=O)NH-,
$L^4$, $L^6$, and $L^8$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, d, e, and f are each independently an integer ranging from 0 to 2, and

in Chemical Formula 6,

M comprises an alkali metal,
wherein "substituted" indicates that hydrogen is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes

an organic or inorganic cation), and a phosphate group ($-PO_3H_2$) or a salt thereof ($-PO_3MH$ or $-PO_3M_2$, here, M denotes an organic or inorganic cation).

**6.** The separator (30) of any one of the preceding claims, wherein the sulfonate group-containing structural unit is included in an amount in a range of 0.1 mol% to 60 mol% of the (meth)acryl-based binder.

**7.** The separator (30) of any one of the preceding claims, wherein the (meth)acryl-based binder has a melting point in a range of 160 °C or higher.

**8.** The separator (30) of any one of the preceding claims, wherein the (meth)acryl-based binder further comprises one or more of a structural unit derived from (meth)acrylate or (meth)acrylic acid, a cyano group-containing structural unit, and a structural unit derived from (meth)acrylamide.

**9.** The separator (30) of claim 8, wherein the (meth)acryl-based binder comprises the sulfonate group-containing structural unit, the structural unit derived from (meth)acrylate or (meth)acrylic acid, and the cyano group-containing structural unit.

**10.** The separator (30) of claim 8, wherein the (meth)acryl-based binder comprises the sulfonate group-containing structural unit and the structural unit derived from (meth)acrylamide.

**11.** The separator (30) of any one of the preceding claims, wherein a mass ratio of the (meth)acryl-based binder to the filler is in a range of 1:10 to 1:50.

**12.** The separator of any one of the preceding claims, wherein the coating layer has a total thickness ranging from 1 μm to 3 μm.

**13.** A rechargeable lithium battery (100) comprising:

a positive electrode (10);
a negative electrode (20); and
the separator (30) of any one of the preceding claims located between the positive electrode and the negative electrode.

FIG. 1

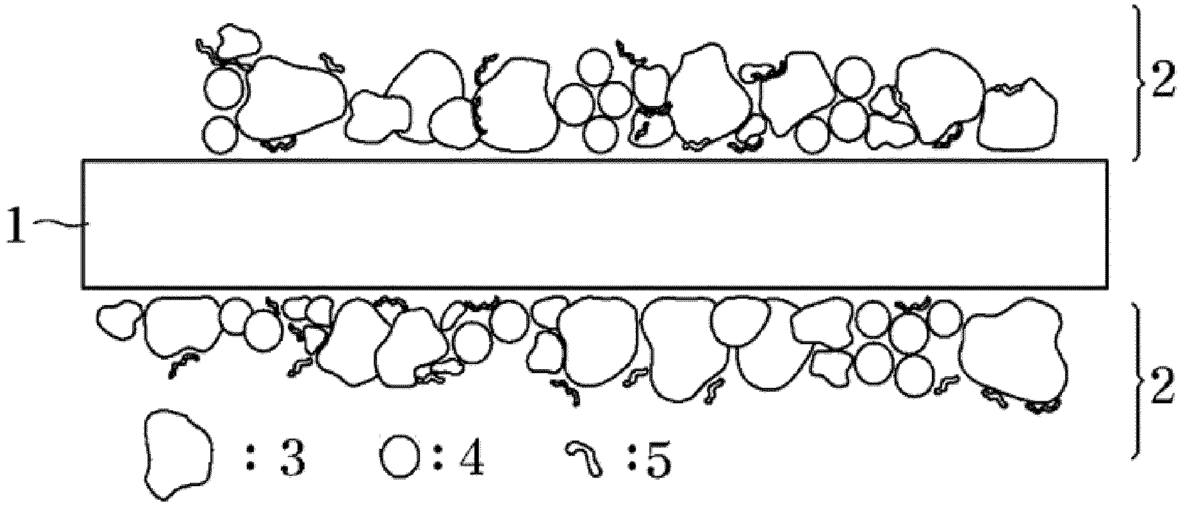

FIG. 2

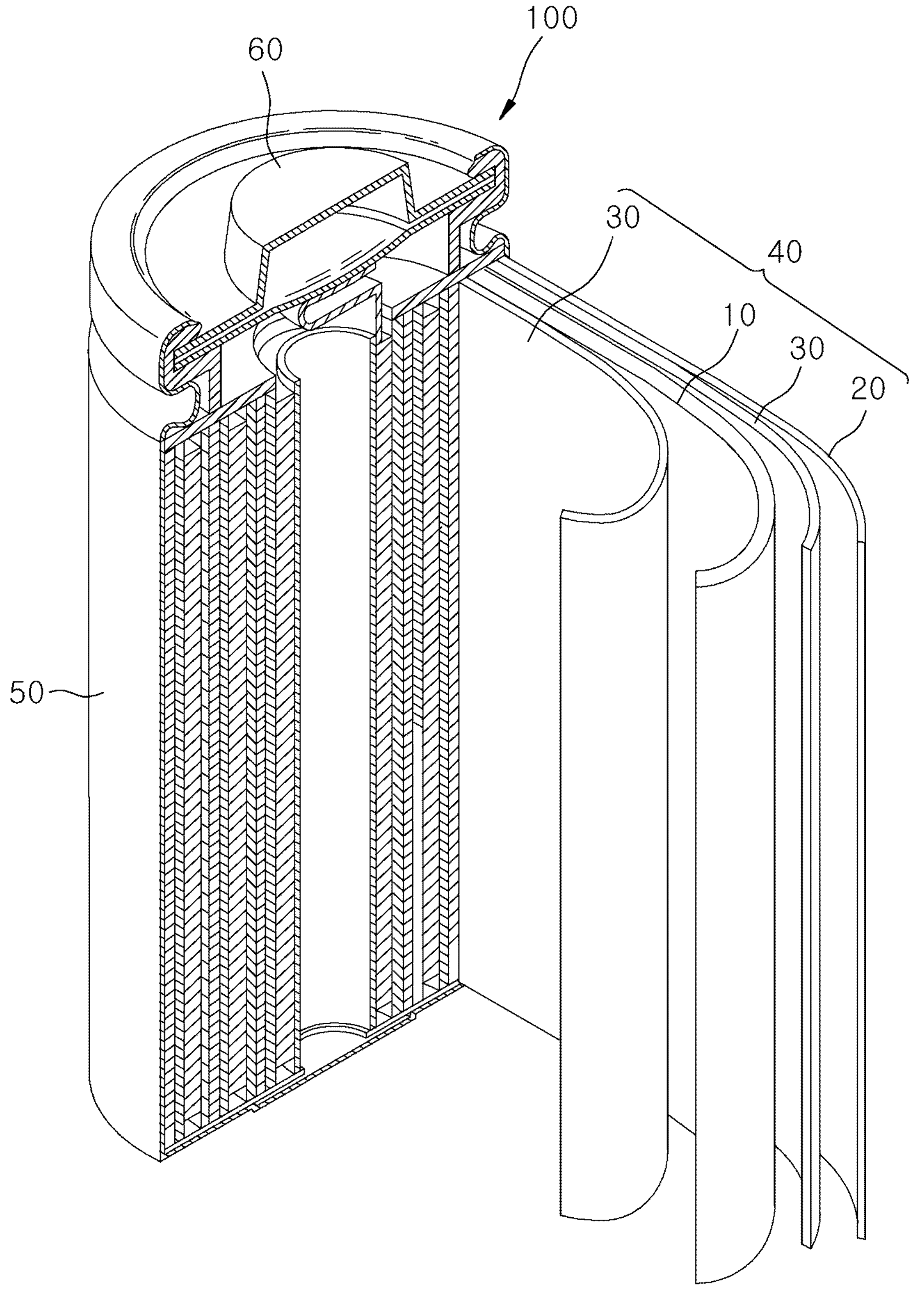

FIG. 3

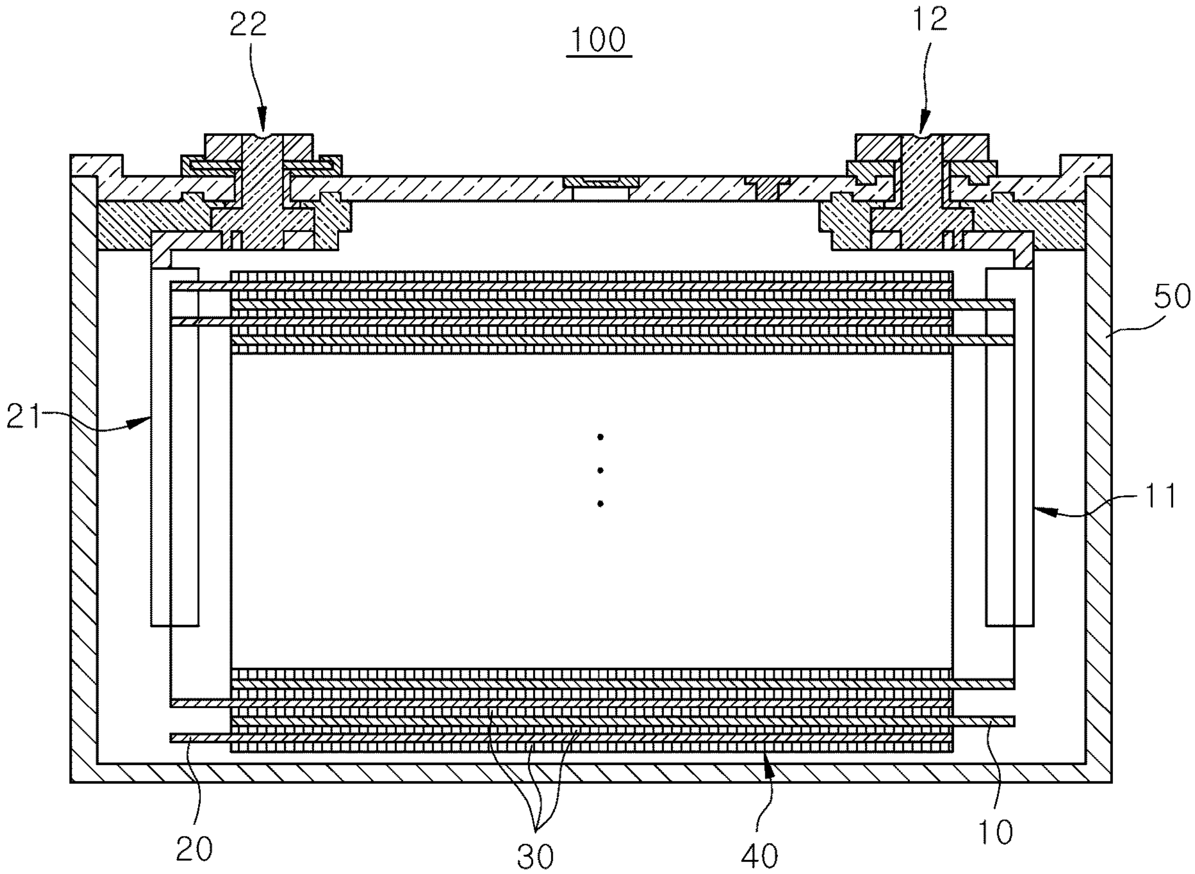

FIG. 4

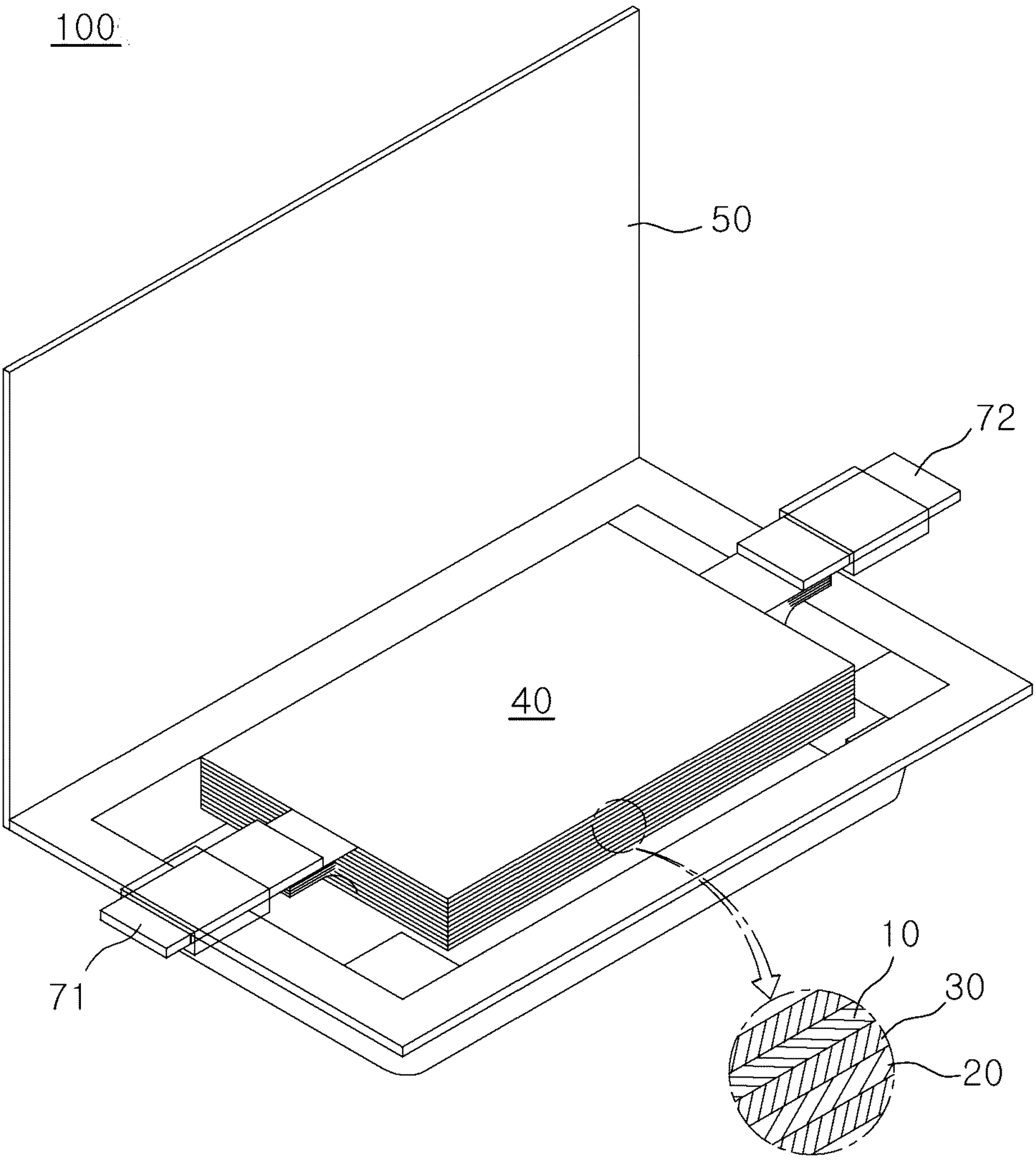

FIG. 5

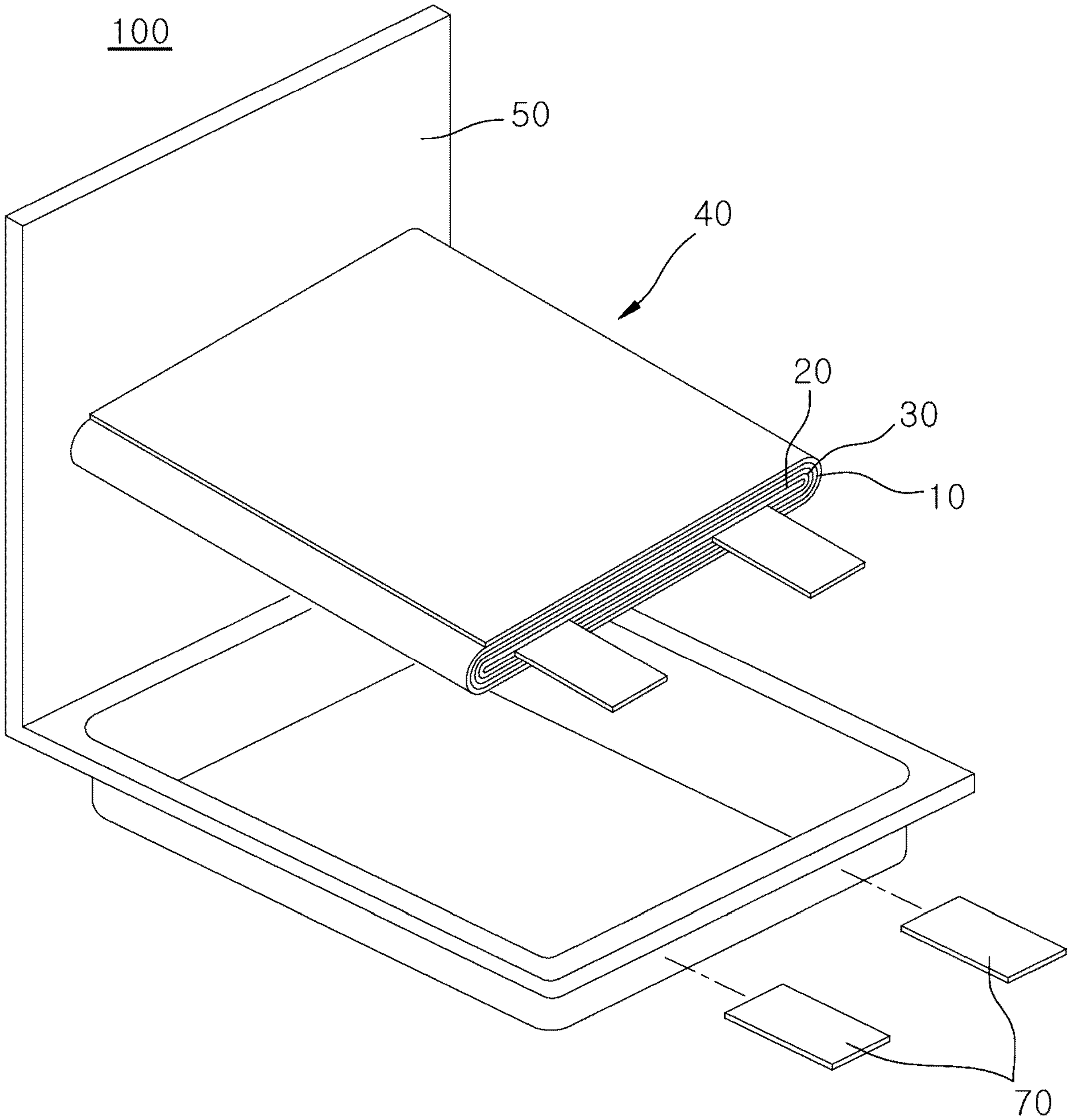

FIG. 6

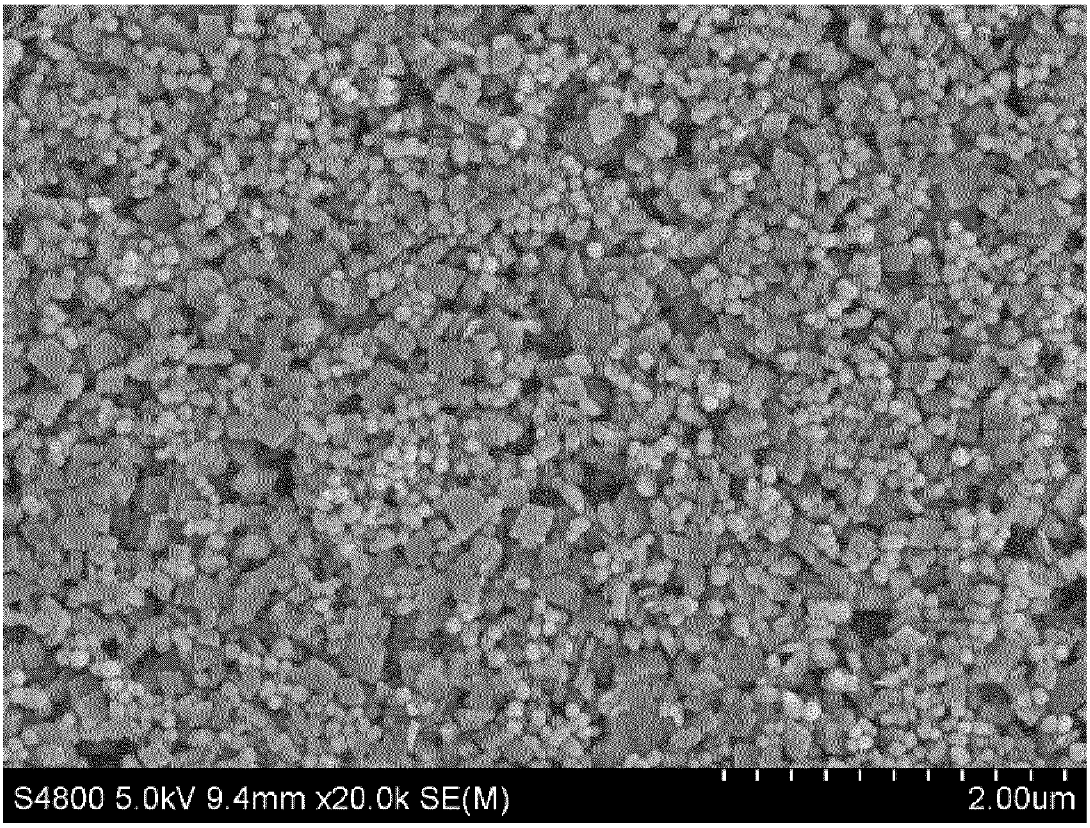

Europäisches Patentamt
European Patent Office
Office européen des brevets

# EUROPEAN SEARCH REPORT

Application Number
EP 25 17 3337

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/037739 A1 (LEE JUNGYOON [KR] ET AL) 3 February 2022 (2022-02-03) * paragraphs [0053], [0054], [0056], [0064], [0068], [0088], [0093], [0102], [0111]; claims 1,2,7; examples 2-6 * ----- | 1-13 | INV. H01M10/0525 H01M50/403 H01M50/42 H01M50/431 H01M50/446 H01M50/449 |
| A | US 2022/013859 A1 (KIM GAIN [KR] ET AL) 13 January 2022 (2022-01-13) * examples * ----- | 1-13 | |

TECHNICAL FIELDS SEARCHED (IPC)

H01M

The present search report has been drawn up for all claims

1

| Place of search | Date of completion of the search | Examiner |
|---|---|---|
| Munich | 25 September 2025 | Duval, Monica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 3337

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2025

| Patent document cited in search report | Publication date | Patent family member(s) | Publication date |
|---|---|---|---|
| US 2022037739 A1 | 03-02-2022 | CN 113273027 A | 17-08-2021 |
| | | EP 3905380 A1 | 03-11-2021 |
| | | KR 20200079905 A | 06-07-2020 |
| | | US 2022037739 A1 | 03-02-2022 |
| | | WO 2020138627 A1 | 02-07-2020 |
| US 2022013859 A1 | 13-01-2022 | CN 113228399 A | 06-08-2021 |
| | | EP 3902028 A1 | 27-10-2021 |
| | | KR 20200077215 A | 30-06-2020 |
| | | US 2022013859 A1 | 13-01-2022 |
| | | WO 2020130268 A1 | 25-06-2020 |

EPO FORM P0459

For more details about this annex : see Official Journal of the European Patent Office, No. 12/82